# EUROPEAN PATENT APPLICATION

(11) **EP 2 975 514 A1**
(43) Date of publication of application: **20.01.2016**
(21) Application number: 15171087.8
(22) Date of filing: 09.06.2015
(51) Int. Cl.: G06F 3/147, G07G 1/14, G06Q 30/02, G09F 1/00

(54) **GATEWAY, ELECTRONIC INFORMATION LABEL SYSTEM AND METHOD FOR TRANSMITTING DISPLAY INFORMATION OF ELECTRONIC INFORMATION LABEL**

(30) Priority: 18.07.2014 KR 20140091170
(71) Applicant: Samsung Electro-Mechanics Co., Ltd., Gyeonggi-do (KR)
(72) Inventor: CHOI, Byong Hyok, Seoul (KR); SEO, Jeong Su, Gyeonggi-do (KR)
(74) Representative: Grünecker Patent- und Rechtsanwälte PartG mbB

(57) **Abstract**

A gateway, an electronic information label system and a method for transmitting display information of an electronic information label are provided. The electronic information label system includes a plurality of electronic information labels comprising a segment-type electronic information label and an image-type electronic information label; a management server configured to create display information for the plurality of electronic information labels and transmit the display information to a gateway; and the gateway configured to determine transmission time of the display information based on a display type of an electronic information label to which to transmit the display information and transmit the display information to each of the plurality of electronic information label based on the determined transmission time.

## Description

### CROSS-REFERENCE TO RELATED APPLICATION(S)

This application claims priority from Korean Patent Application No. 10-2014-0091170, filed on July 18, 2014, in the Korean Intellectual Property Office, the disclosure of which is incorporated herein by reference in its entirety.

### BACKGROUND

### 1. Field

The following description relates to an electronic information label system.

### 2. Description of the Related Art

In an electronic information label (EIL) system employing electronic information labels in 7-segment form, data to be transmitted by a gateway to the electronic information labels is relatively small in size, but only limited types of information can be displayed due to the nature of 7-segment display scheme in which only numbers and some icons can be represented.

By contrast, in the case of an image information label that displays information in the form of image, there is no limitation on types of information that can be displayed, as compared to the electronic information label in 7-segment form, while the size of data to be transmitted by a gateway is about 10 to 50 times greater than the size of data for the electronic information label in 7-segment form.

Therefore, when a store in which electronic information labels in 7-segment form are previously installed additionally employs electronic information labels in graphical form, a communication protocol is required to operate the electronic information labels of both different types.

### SUMMARY

The following description relates to an electronic information label system capable of operating electronic information labels of different display types.

In one general aspect, there is provided an electronic information label (EIL) system including: a plurality of electronic information labels comprising a segment-type electronic information label and an image-type electronic information label; a management server configured to create display information for the plurality of electronic information labels and transmit the display information to a gateway; and the gateway configured to determine transmission time of the display information based on a display type of an electronic information label to which to transmit the display information and transmit the display information to each of the plurality of electronic information label based on the determined transmission time.

The gateway may be configured to, in response to receiving an information request from the segment-type electronic information label, transmit the display information to the segment-type electronic information label immediately upon receiving the information request.

The gateway may be configured to, in response to receiving an information request from the image-type electronic information label, allocate a display information transmission time for the image-type electronic information label, and transmit information about the allocated display information transmission time to the image-type electronic information label.

In another general aspect, there is provided a gateway including: a display information receiver configured to receive display information for the plurality of electronic information label from the server; a storage configured to store the received display information from the server; and a display information transmitter configured to determine transmission time of the display information based on a display type of an electronic information label to which to transmit the display information, and transmit the display information to each of the plurality of electronic information label based on the determined transmission time.

The display information transmitter may be configured to, in response to receiving an information request from the segment-type electronic information label, transmit the display information to the segment-type electronic information label at immediately upon receiving the information request.

The display information transmitter may be configured to, in response to receiving an information request from the image-type electronic information label, allocate a display information transmission time for the image-type electronic information label, and transmit information about the allocated display information transmission time to the image-type electronic information label.

In yet another general aspect, there is provided a method for transmitting display information of an electronic information label, including: receiving display information for a plurality of electronic information labels from a server, wherein the electronic information labels include a segment-type electronic information label and an image-type electronic information label; determining transmission time of the display information for the plurality of electronic information labels based on a display type of each of the plurality of electronic information labels; and transmitting the display information to each of the plurality of electronic information label based on the determined transmission time.

The determining of the transmission time of the display information may include determining the transmission time of the display information such that, in response to an information request from the segment-type electronic information label, the display information can be transmitted to the segment-type electronic information label immediately upon the information request being received.

The determining of the transmission time of the display information may include, in response to an information request being received from the image-type electronic information label, allocating a display information transmission time for the image-type electronic information label.

Other features and aspects will be apparent from the following detailed description, the drawings, and the claims.

### BRIEF DESCRIPTION OF THE DRAWINGS

FIG. 1 is a diagram illustrating a configuration of an electronic information label (EIL) system according to an exemplary embodiment.
FIG. 2 is a diagram illustrating a configuration of a gateway according to an exemplary embodiment.
FIG. 3 is a diagram illustrating an example of an allocation table in accordance with the exemplary embodiment.
FIG. 4 is a diagram illustrating an example of transmission of display information between a gateway and a plurality of electronic information labels.
FIG. 5 is a flowchart illustrating procedures for transmitting display information to an electronic information label according to an exemplary embodiment.
FIG. 6 is a flowchart illustrating procedures for transmitting display information according to a display type of an electronic information label according to an exemplary embodiment.
FIG. 7 is a flowchart illustrating procedures of a segment-type electronic information label to receive display information according to an exemplary embodiment.
FIG. 8 is a flowchart illustrating procedures of an image-type electronic information label to receive display information according to an exemplary embodiment.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

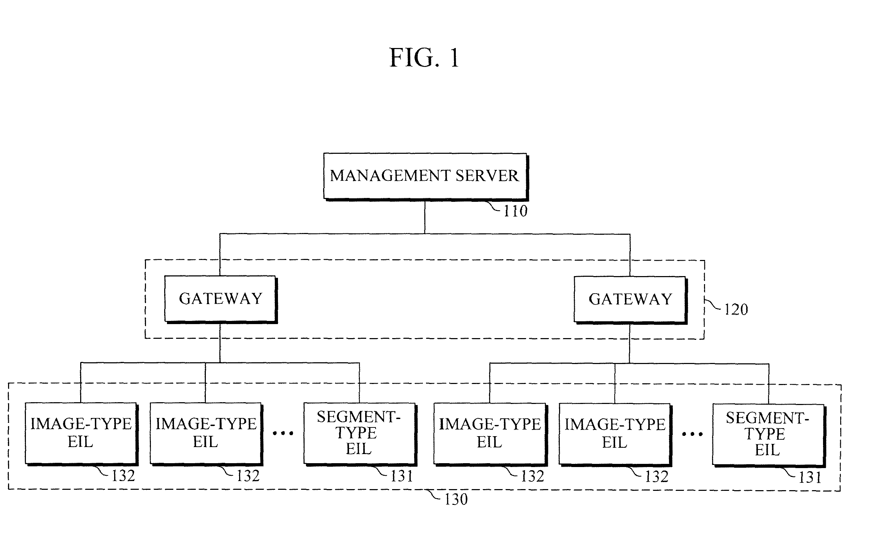

FIG. 1 is a diagram illustrating a configuration of an electronic information label (EIL) system according to an exemplary embodiment.

Referring to FIG. 1, the EIL system includes a management server 110, a gateway 120, and a plurality of electronic information labels (EILs) 130.

Each of the electronic information labels 130 include an electronic display means to display various items of information on a display screen based on display information transmitted from the management server 110. For example, the electronic information label 130 may display a price of a product that is arranged and displayed at a designated section in a store. The electronic display means may be in various forms, such as e-paper, a liquid crystal display (LCD), a light emitting diode (LED), or the like.

The electronic information labels 130 include an electronic information label 131 of a segment type and an electronic information label 132 of an image type.

The segment-type electronic information label 131 refers to an electronic information label that displays letters or numbers in 7-segment form. In addition, the image-type electronic information label 132 refers to an electronic information label that displays information in an image form on a display screen, as well as letters and/or numbers, using a dot-matrix scheme.

The electronic information label 130 which stands by in sleep mode may wake up according to a predefined wake-up interval, and check whether there is display information to receive from the gateway 120.

In this case, whether there is information to be received may be determined based on a wakeup frame transmitted from the gateway 120. For example, if a received wake-up frame does not include identification information of the electronic information label 130, the electronic information label 130 may determine that there is no display information to receive, and then enter in sleep mode. The electronic information label 130 may remain in sleep mode until the next wake-up interval arrives.

On the other hand, if the received wake-up frame from the gateway 120 contains the identification information of the electronic information label 130, the electronic information label 130 may determine that there is display information to receive, and issue an information request to the gateway 120. In this case, the information request may include display type information of the electronic information label 130.

A method of the electronic information label 130 to receive the display information from the gateway 120 may vary depending on the display type of the electronic information label 130.

Specifically, the image-type electronic information label 132 is allocated display information transmission time by issuing the information request to the gateway 120, and then enters and remains in sleep mode until the arrival of the allocated display information transmission time. Then, the image-type electronic information label 132 wakes up at the allocated display information transmission time, and issues a data request to the gateway 120 to receive the display information.

In contrast, the segment-type electronic information label transmits information request to the gateway 120 and receive display information without allocation of a specific transmission time.

The EIL server 110 creates display information regarding the electronic information label 130 and transmits the display information to the gateway 120. The display information may include information about data to be displayed on the display screen of the electronic information label 130 and layout information about where a plurality of display data is to be displayed on the display screen. In addition, the display information may include identification information of the electronic information label 130 that is to receive the display information. For example, the identification information may be a media access control (MAC) address of the electronic information label 130 to receive the display information.

The gateway 120 relays data transfer between the management server 110 and the electronic information label 130. The gateway 120 may receive display information regarding a plurality of electronic information labels 130 from the management server through, for example, a wired network, such as Ethernet. Moreover, the gateway 120 may transmit the display information to the electronic information label 130 through near-field wireless communication, such as ZigBee, Bluetooth, infrared communication, radio frequency identification (RFID), or the like.

Furthermore, the gateway 120 determines the display information transmission time for each electronic information label 130 based on the display type of the electronic information label 130, and transmits the display information to the electronic information label 130 at the determined transmission time.

In one exemplary embodiment, a display type of the electronic information label 130 to which the display information is transmitted may be determined based on display type information received from the electronic information label 130. More specifically, the gateway 120 notifies the electronic information label 130 via a wake-up frame that there is display information to be transmitted to the electronic information label 130, and receives information request that includes the display type information from the electronic information label 130 that has received the wake-up frame. Then, from the received information request, the gateway 120 is able to determine the display type of the electronic information label 130.

In one exemplary embodiment, when receiving the information request from the image-type electronic information label 132, the gateway 120 may allocate a display information transmission time for the image-type electronic information label 132, and transmit the display information at the allocated display information transmission time.

More specifically, the gateway 120 may transmit a response signal that includes information about the allocated display information transmission time to the image-type electronic information label 132, and, at the allocated display information transmission time, receive a data request from the corresponding image-type electronic information label 132, and transmit the display information.

In addition, in one exemplary embodiment, the response signal to be transmitted to the image-type electronic information label 132 may include a synchronization signal for time synchronization between the image-type electronic information label 132 and the gateway 120.

Further, in one exemplary embodiment, the gateway 120 may allocate the display information transmission time for the image-type electronic information label 132 using an allocation table that includes a plurality of time slots. For example, in a case where the gateway 120 receives an information request from the image-type electronic information label 132, the gateway 120 may allocate the image-type electronic information label 132 to an empty time slot of the allocation table, and transmit the information about the allocated time slot to the image-type electronic information label 132. Thereafter, in response to receiving a display information request from the image-type electronic information label having the time slot allocated thereto, the gateway 120 may transmit the display information to the image-type electronic information label 132.

In one exemplary embodiment, in response to receiving an information request from the segment-type electronic information label 131, the gateway 120 may immediately transmit display information to the segment-type electronic information label 131.

That is, because the type of information that the segment-type electronic information label 131 can display is limited to letters and/or numbers, the size of display information is relatively small and it is possible to transmit the display information in a short time.

In contrast, since the image-type electronic information label 132 can display information not only in letter and/or number form, but also in image form, the size of display information is relatively large, compared to that of the segment-type electronic information label 131, and a longer period of time is required to transmit such display information.

Therefore, the gateway 120 transmits display information to the segment-type electronic information label 131 instantly upon receiving an information request from the segment-type electronic information label 131, and transmits display information to the image-type electronic information label 132 at an allocated time, such that it can provide efficient transmission of display information.

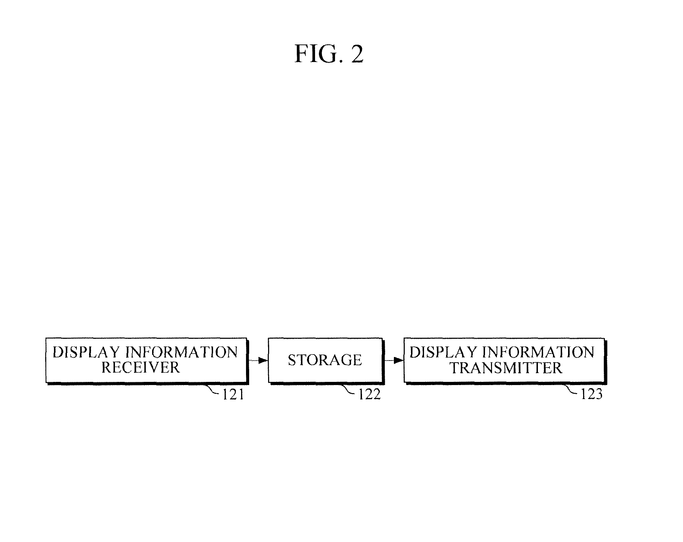

FIG. 2 is a diagram illustrating a configuration of a gateway according to an exemplary embodiment.

Referring to FIG. 2, the gateway 120 includes a display information receiver 121, a storage 122, and a display information transmitter 123.

The display information receiver 121 receives display information regarding a plurality of electronic information labels 130 from the management server 110. For example, the display information receiver 121 may communicate with the management server 110 over a wired network, such as Ethernet, and store in the storage 122 the display information received from the management server.

The storage 122 may store the display information received through the display information receiver 121. The storage 122 may include various types of a storage medium, for example, flash memory, hard disk, multimedia card micro type memory, card-type memory (e.g., SD or XD memory), RAM, SRAM (static RAM), ROM, electrically erasable programmable ROM (EEPROM), programmable ROM (PROM), magnetic tapes, magnetic disk, optical disk, and the like.

The display information transmitter 123 determines the transmission time at which to send the display information based on a display type of the electronic information label 130, and transmits the display information to the electronic information label 130 at the determined transmission time.

In this case, the display information transmitter 123 may determine the display type of the electronic information label 130 to which the display information is to transmitted, based on the received display type information from the electronic information label 130. More specifically, the display information transmitter 123 may notify the electronic information label 130 via a wake-up frame that there is display information to transmit to the electronic information label 130, and receive an information request from the electronic information label 130 that has received the wake-up frame, such that the display information transmitter can determine the display type of the electronic information label 130 to which to send the display information.

In one exemplary embodiment, in response to receiving an information request from the image-type electronic information label 132, the display information transmitter 123 may allocate a display information transmission time for the image-type electronic information label 132.

In this case, the display information transmitter 123 may allocate the display information transmission time for the image-type electronic information label 132 using an allocation table that includes a plurality of time slots. For example, in response to receiving information requests from a plurality of image-type electronic information labels 132, the display information transmitter 123 may sequentially allocate the image-type electronic labels to time slots in the allocation table.

In addition, the display information transmitter 123 may transmit the allocated display information transmission time to the corresponding image-type electronic label 132 by sending a response signal for the information request. In this case, the response signal to be transmitted to the image-type electronic information label 132 may include a synchronization signal for time synchronization between the image-type electronic information label 132 and the gateway 120.

Then, in response to the response signal, the image-type electronic information label 132 transmits a data request at the allocated display information transmission time. In response to the data request from the image-type electronic information label 132, the display information transmitter 123 may transmit the display information to the corresponding image-type electronic information label 132.

Immediately upon receiving an information request from the segment-type electronic information label, the display information transmitter 123 may transmit display information to the segment-type electronic information label. That is, the display information transmitter 123 instantly transmits the display information upon receiving the information request from the segment-type electronic information label 131, so that the display information for the segment-type electronic information can be transmitted with higher priority than the display information for the image-type electronic information label 132.

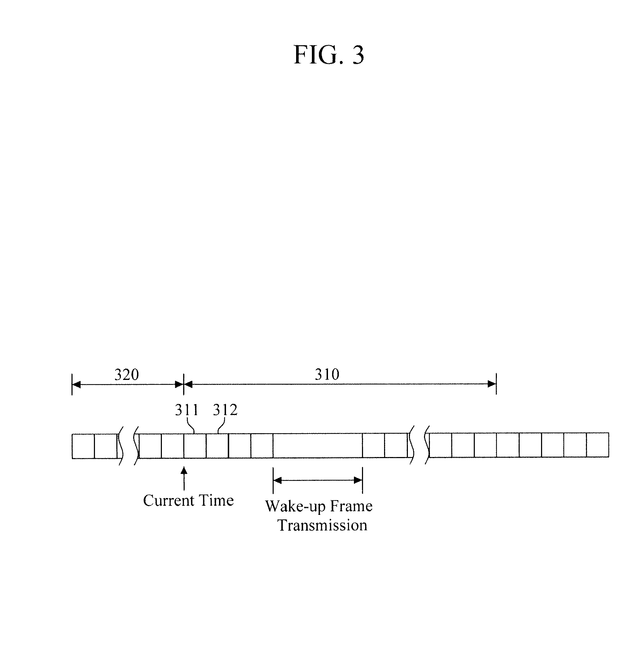

FIG. 3 is a diagram illustrating an example of an allocation table in accordance with the exemplary embodiment.

Referring to FIG. 3, the allocation table may include a plurality of time slots. The time slots may be designed by taking into account the time at which a wake-up frame is transmitted, and the length of each time slot may be set according to the size of display information.

The gateway 120 may receive an information request from the image-type electronic information label 132 and allocate the image-type electronic information label 132 to an empty time slot.

More specifically, under the assumption that all time slots of the example illustrated in FIG. 3 are empty, when receiving an information request from one image-type electronic information label 132, the gateway 120 may allocate the image-type electronic information label 132 to the first slot 311 after the current time. Thereafter, when receiving an information request from another image-type electronic information label 132, the gateway 120 may allocate that image-type electronic information label 132 to the next slot 312.

In one exemplary embodiment, the allocation table may have a given length of time (for example, one hour), and over time, the gateway 120 may delete the time slots 320 before the current time, and add new time slots.

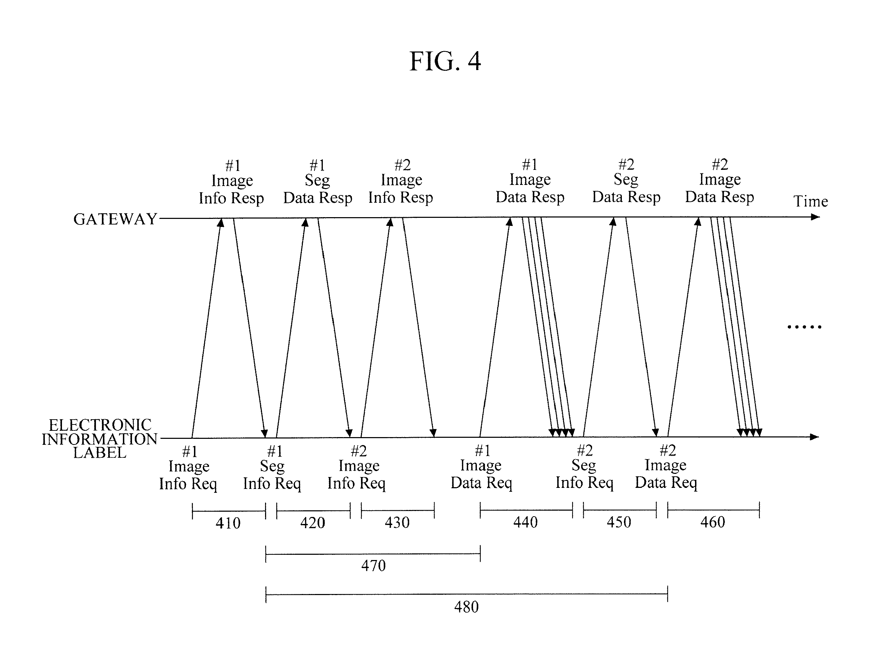

FIG. 4 is a diagram illustrating an example of transmission of display information between a gateway and a plurality of electronic information labels.

Referring to FIG. 4, in response to information requests (represented as "Image Info Req") from a plurality of image-type electronic information labels, the gateway 120 allocates display information transmission times for each image-type electronic information label and notifies the respective image-type electronic information labels of the allocated transmission time by sending response signals (represented as "Image Info Resp") in 410 and 430.

In response to receiving the response signal from the gateway 120, each image-type electronic information label enters into sleep mode to wait until the arrival of the allocated transmission time in 470 and 480. Then, each image-type electronic information label that wakes up at the allocated transmission time transmits a data request (represented as "Image Data Req") to the gateway, and then the gateway 120 transmits display information (represented as "Image Data Resp") to each image-type electronic information label in 440 and 460. In one exemplary embodiment, as illustrated, the gateway 120 may divide the display information into a plurality of packets and consecutively transmit the packets to the corresponding image-type electronic information label.

In addition, in response to an information request (represented as "Seg Info Req") from any segment-type electronic information label, the gateway 120 immediately transmits display information (represented as "Seg Data Resp") to the requesting segment-type electronic information label in 420 and 450. Because the size of display information for the segment-type electronic information label is small enough to be transmitted via a single packet, the gateway 120 can instantly transmit the display information to the segment-type electronic information label without performing additional transmission time allocation for the segment-type electronic information label.

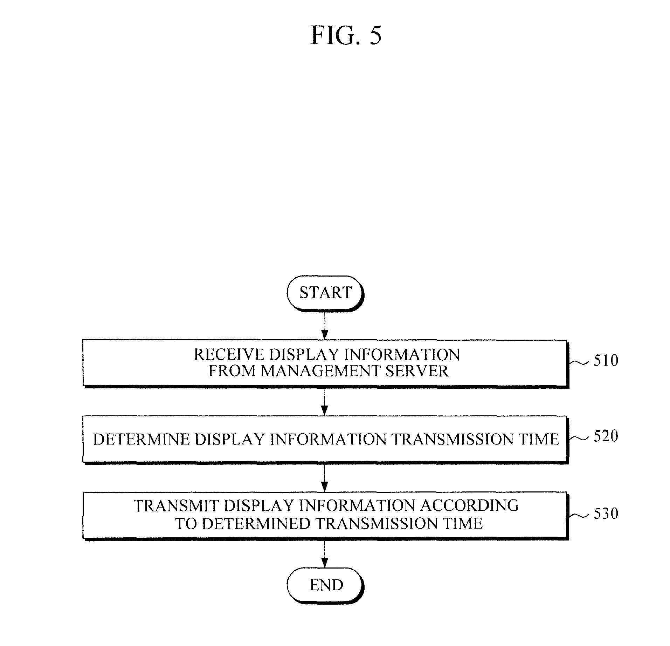

FIG. 5 is a flowchart illustrating procedures for transmitting display information to an electronic information label according to an exemplary embodiment.

Referring to FIG. 5 in conjunction with FIG. 1, in 510, the gateway 120 receives display information for a plurality of electronic information labels 130 from the management server.

Then, in 520, the gateway 120 determines a display information transmission time based on the display type of the electronic information label 130 to which to transmit the display information.

In 530, the gateway 120 transmits the display information to the corresponding electronic information label 130 according to the determined transmission time.

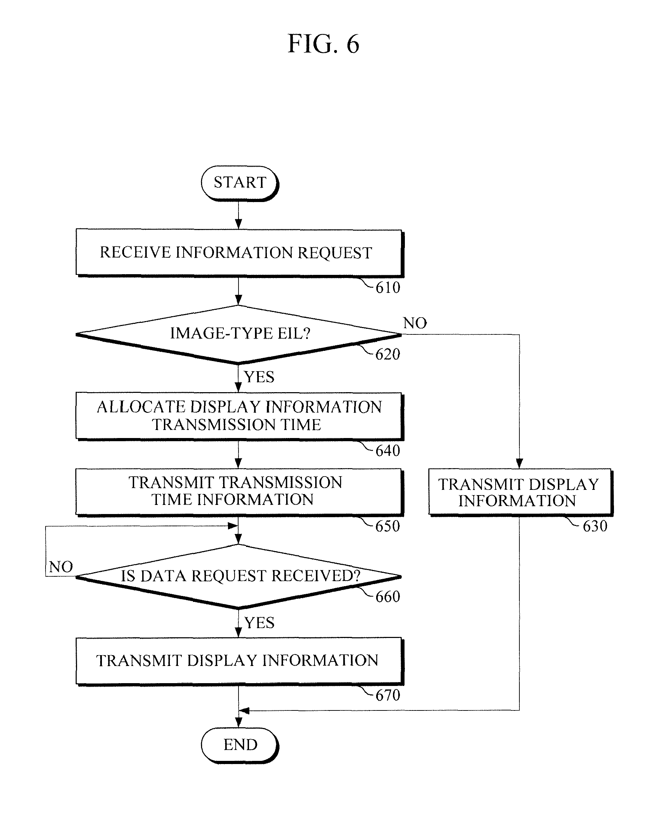

FIG. 6 is a flowchart illustrating procedures for transmitting display information according to a display type of an electronic information label according to an exemplary embodiment.

Referring to FIG. 6 in conjunction with FIG. 1, in 610, the gateway 120 receives an information request from the electronic information label 130.

Then, in 620, the gateway 120 determines a display type of the electronic information label 130 that has transmitted the information request.

In 630, in response to a determination that the electronic information label is a segment-type electronic information label 131, the gateway 120 immediately transmits the display information.

In response to a determination that the electronic information label is an image-type electronic label 132, the gateway 120 allocates a display information transmission time for the image-type electronic information label 132 in 640, and then transmits the allocated transmission time information to the corresponding electronic information label 130 in 650.

In response to receiving a data request from the image-type electronic information label 132 that has the transmission time allocated thereto in 660, the gateway 120 transmits the display information to the requesting image-type electronic information label in 670.

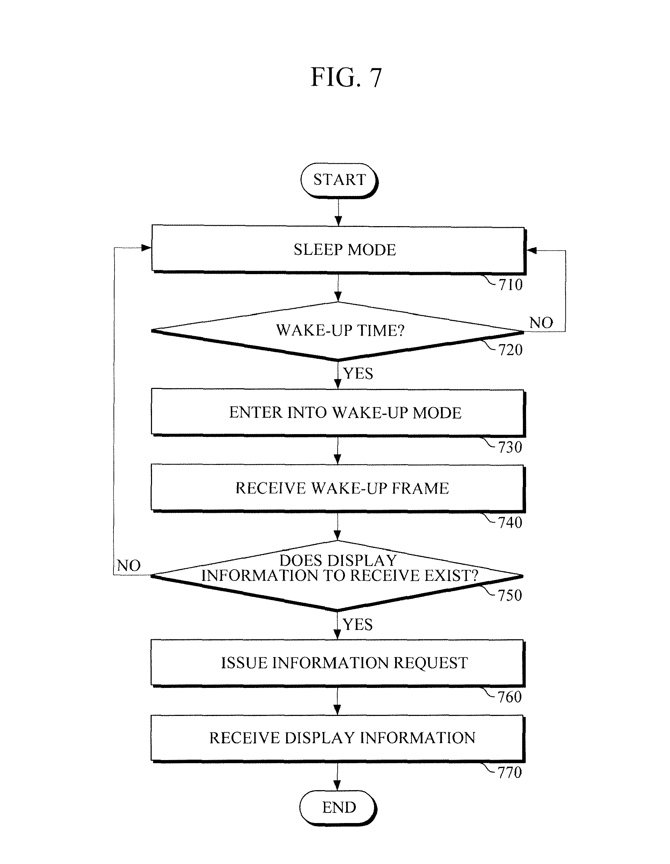

FIG. 7 is a flowchart illustrating procedures of a segment-type electronic information label to receive display information according to an exemplary embodiment.

Referring to FIG. 7 in conjunction with FIG. 1, the segment-type electronic information label 131 remains in sleep mode in 710, and, when a wake-up time arrives according to a wake-up interval in 720, the segment-type electronic information label 131 enters into wake-up mode in 730.

Then, the segment-type electronic information label 131 receives a wake-up frame from the gateway 120 in 740, and then determines whether there is display information to receive in 750.

In response to a determination that there is no display information to receive, the segment-type electronic information label 131 enters and remains again in sleep mode until the next wake-up interval.

Meanwhile, in response to a determination that there is display information to receive, the segment-type electronic information label 131 transmits an information request to the gateway 120 in 760, and receives the display information in 770.

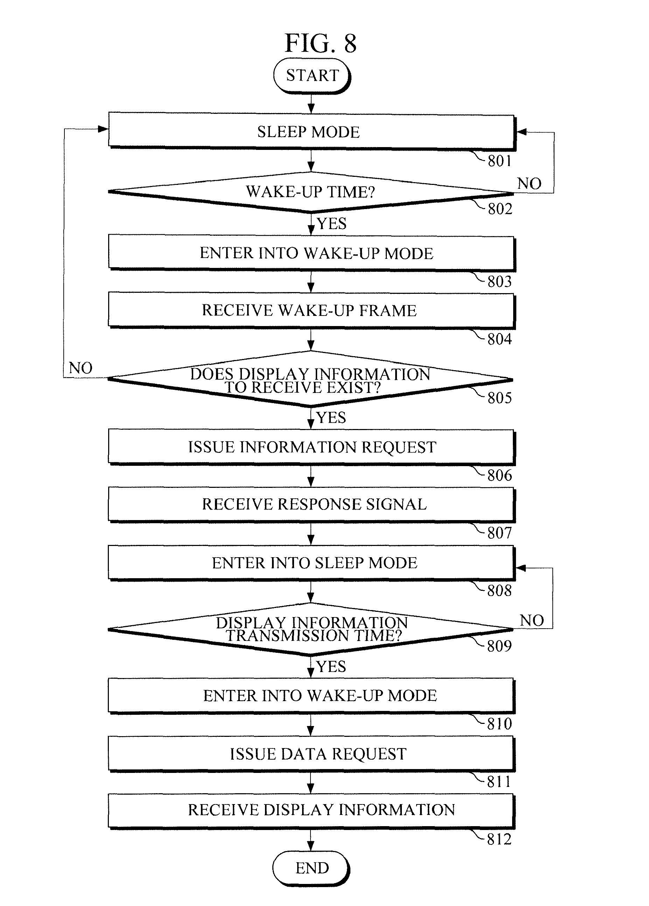

FIG. 8 is a flowchart illustrating procedures of an image-type electronic information label to receive display information according to an exemplary embodiment.

Referring to FIG. 8 in conjunction with FIG. 1, the image-type electronic information label 132 remains in sleep mode in 801 until the arrival of a wake-up time according to a wake-up interval in 802, and enters into wake-up mode in 803.

Then, the image-type electronic information label 132 receives a wake-up frame from the gateway 120 in 804, and then determines whether there is display information to receive in 805.

At this time, in response to a determination that there is no display information to receive, the image-type electronic information label 131 enters and remains again in sleep mode until the arrival of the next wake-up interval.

Meanwhile, in response to a determination that there is display information to receive, the image-type electronic information label 132 issues an information request to the gateway 120 in 806, and then receives a response signal that includes a display information transmission time allocated thereto in 807.

In response to the response signal from the gateway 120, the image-type electronic information label 132 enters and remains in sleep mode in 808 until the arrival of a display information transmission time allocated thereto in 809.

When the allocated display information transmission time arrives in 809, the image-type electronic information label 132 enters into wake-up mode in 810.

Thereafter, the image-type electronic information label 132 transmits a data request to the gateway 120 in 811, and receives the display information in 812.

As apparent from the above, transmission of display information is performed depending on the display type of an electronic information label, such that display information for a segment-type electronic information label is transmitted with higher priority than display information for an image-type electronic information label, so that fast and efficient transmission of display information can be ensured even in the case of transmitting a large amount of display information for a plurality of image-type electronic information labels.

The current embodiments can be implemented as computer readable codes in a computer readable record medium. Codes and code segments constituting the computer program can be easily inferred by a skilled computer programmer in the art. The computer readable record medium includes all types of record media in which computer readable data are stored. Examples of the computer readable record medium include a ROM, a RAM, a CD-ROM, a magnetic tape, a floppy disk, and an optical data storage. Further, the record medium may be implemented in the form of a carrier wave such as Internet transmission. In addition, the computer readable record medium may be distributed to computer systems over a network, in which computer readable codes may be stored and executed in a distributed manner.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. An electronic information label (EIL) system comprising:
a plurality of electronic information labels comprising a segment-type electronic information label and an image-type electronic information label;
a management server configured to create display information for the plurality of electronic information labels and transmit the display information to a gateway; and
the gateway configured to determine transmission time of the display information based on a display type of an electronic information label to which to transmit the display information and transmit the display information to each of the plurality of electronic information label based on the determined transmission time.

2. The EIL system of claim 1, wherein the plurality of electronic information labels each wake up according to a predetermined wake-up interval, and transmit an information request that includes display type information to the gateway.

3. The EIL system of claim 2, wherein the gateway is configured to, in response to receiving an information request from the segment-type electronic information label, transmit the display information to the segment-type electronic information label immediately upon receiving the information request.

4. The EIL system of claim 2, wherein the gateway is configured to, in response to receiving an information request from the image-type electronic information label, allocate a display information transmission time for the image-type electronic information label, and transmit information about the allocated display information transmission time to the image-type electronic information label.

5. The EIL system of claim 4, wherein:
the image-type electronic information label transmits a data request to the gateway when the display information transmission time arrives, and
the gateway transmits the display information to the image-type electronic information label in response to the data request from the image-type electronic information label.

6. The EIL system of claim 4, wherein the image-type electronic information label enters into sleep mode in response to receiving the information about the display information transmission time, and remains in sleep mode until an arrival of the display information transmission time.

7. The EIL system of claim 4, wherein the gateway is configured to allocate the display information transmission time for the image-type electronic information label using an allocation table that includes a plurality of time slots.

8. The EIL system of claim 1, wherein the gateway is configured to comprise:
a display information receiver configured to receive display information for the plurality of electronic information label from the server;
a storage configured to store the received display information from the server; and
a display information transmitter configured to determine transmission time of the display information based on a display type of an electronic information label to which to transmit the display information, and transmit the display information to each of the plurality of electronic information label based on the determined transmission time.

9. A method for transmitting display information of an electronic information label, comprising:
receiving display information for a plurality of electronic information labels from a server, wherein the electronic information labels include a segment-type electronic information label and an image-type electronic information label;
determining transmission time of the display information for the plurality of electronic information labels based on a display type of each of the plurality of electronic information labels; and
transmitting the display information to each of the plurality of electronic information label based on the determined transmission time.

10. The method of claim 9, wherein the determining of the transmission time of the display information comprises:
receiving an information request that includes display type information from any of the plurality of electronic information labels; and
determining the transmission time of the display information based on the display type information.

11. The method of claim 10, wherein the determining of the transmission time of the display information comprises determining the transmission time of the display information such that, in response to an information request from the segment-type electronic information label, the display information can be transmitted to the segment-type electronic information label immediately upon the information request being received.

12. The method of claim 10, wherein the determining of the transmission time of the display information comprises, in response to an information request being received from the image-type electronic information label, allocating a display information transmission time for the image-type electronic information label.

13. The method of claim 12, wherein the transmitting of the display information comprises:
transmitting information about the display information transmission time to the image-type electronic information label;
receiving a data request from the image-type electronic information label that has received the information about the display information transmission time; and
transmitting the display information to the image-type electronic information label that has transmitted the data request.

14. The method of claim 12, wherein the determining of the transmission time of the display information comprises allocating the display information transmission time for the image-type electronic information label using an allocation table that includes a plurality of time slots.
